Europäisches Patentamt

European Patent Office

Office européen des brevets

(19)

(11) Veröffentlichungsnummer: **0 120 123**
**B1**

(12) **EUROPÄISCHE PATENTSCHRIFT**

(45) Veröffentlichungstag der Patentschrift:
02.09.87

(21) Anmeldenummer: **83111464.0**

(22) Anmeldetag: **17.11.83**

(51) Int. Cl.⁴: **F 16 J 15/32,** F 16 J 13/00,
F 16 J 15/10

(54) Verschlussdeckel.

(30) Priorität: **19.02.83 DE 3305765**

(43) Veröffentlichungstag der Anmeldung:
03.10.84 Patentblatt 84/40

(45) Bekanntmachung des Hinweises auf die Patenterteilung:
02.09.87 Patentblatt 87/36

(84) Benannte Vertragsstaaten:
**DE FR GB IT**

(56) Entgegenhaltungen:
**AT-B-341 290**
**DE-A-2 807 022**
**DE-A-2 822 615**
**FR-A-2 350 527**

**Aufsatz der MTZ aus dem Jahres 1981, Seite 285**

(73) Patentinhaber: **GOETZE AG, Bürgermeister-Schmidt- Strasse 17, D-5093 Burscheid 1 (DE)**

(72) Erfinder: **Deuring, Hans, Im Eulenflug 29, D-5093 Burscheid (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 120 123 B1

LIBER, STOCKHOLM 1987

## Beschreibung

Die Erfindung betrifft einen Verschlußdeckel, insbesondere zur Abdichtung der Öffnung eines mit einer Welle oder Stange bestückten Gehäuses, bestehend aus einem Profilierten, gegebenenfalls mit Schraubendurchgangslöchern versehenen Grundkörper, der einen dynamischen, konzentrisch zur Welle oder Stange verlaufenden und mindestens einen, in Abhängigkeit von der Kontur des Gehäuses, in einer anderen Ebene liegenden, in wesentlichen flächenförmig ausgebildeten Dichtbereich aufweist, wobei beide Dichtbereiche mit Dichtelementen versehen sind.

Einem Aufsatz der Motortechnischen Zeitschrift (MTZ) aus dem Jahre 1981 ist auf den Seiten 285ff ein Verschlußdeckel der vorab angesprochenen Gattung zu entnehmen. Der Verschlußdeckel weist im Bereich seiner inneren Umfangsfläche einen dynamischen Dichtbereich, der durch einen herkömmlichen Wellendichtring gebildet ist, sowie einen statischen Dichtbereich, der durch einen O-Ring gebildet ist, im Bereich seiner äußeren Umfangsfläche auf. Der Verschlußdeckel ist durch Schrauben mit einem Gehäuse, Kurbelgehäuse oder dergleichen verbunden. Durch die Notwendigkeit des Zusammenfügens der einzelnen Bauteile ergibt sich ein großer Montageaufwand. Dabei ist, bezogen auf das Abdichtergebnis, nicht immer sichergestellt, daß Dichtteile aus ihrer Aufnahme herausrutschen beziehungsweise sich verkanten und somit sich im Betriebszustand des Motors Leckagen einstellen. Da insbesondere Kurbelgehäuse-Deckel aus Gründen der Gewichtseinsparung meist aus Leichtmetall bestehen und ein relativ dünnwandiges Profil aufweisen, ist die Verwendung einer üblichen Flachdichtung im Bereich der Deckelstirnfläche nicht zweckdienlich, da die Dichtspaltweite zwischen Deckel und Gehäuse inkonstant ist. Der DE A- 28 22 615 ist eine Stangendichtung für Stoßdämpfer zu entnehmen, bei der sowohl ein dynamischer als auch ein statischer Dichtbereich vorhanden ist, die durch Kanäle miteinander verbunden sind. Beide Dichtbereiche sind umlaufend ausgebildet und dienen zur Aufnahme elastischer Dichtelemente, die an korrespondierenden Umfangsflächen einer Welle und eines Stoßdämpferrohres dichtend anliegen. Hier ist zwar bereits eine Verbindungsmöglichkeit zweier Dichtbereiche miteinander gegeben, die jedoch auf Verschlußdeckeln mit in unterschiedlichen radialen und axialen Ebenen angeordneten Dichtbereichen keine Anwendung finden können, zumal den Kanälen keinerlei Dichtfunktion zukommt.

Der Erfindung liegt die Aufgabe zugrunde, einen Verschlußdeckel der angesprochenen Gattung so auszubilden, daß einerseits der Montageaufwand reduziert und andererseits eine optimale Abdichtung sämtlicher Dichtbereiche sichergestellt wird.

Diese Aufgabe wird erfindungsgemäß dadurch gelöst, daß die Dichtelemente für den dynamischen und statischen Dichtbereich aus am Deckel-Grundkörper anvulkanisierten Gummiprofilen bestehen, die über zusätzliche Dichtgrenzen miteinander verbunden sind. Durch diese Maßnahme wird zunächst einmal die Einstückigkeit sämtlicher Dichtelemente gewährleistet, was zu einer erheblichen Vereinfachung der Montage führt. Weiterhin ist die Herstellung des einstückigen Dichtelementes vereinfacht, da nur noch ein einziges Formwerkzeug notwendig ist. Da die Verschlußdeckel für derartige Anwendungsfälle meist im Spritzgußverfahren hergestellt werden, ist es nunmehr möglich, mittels einer Maschine erst die Deckel zu spritzgießen und in einem unmittelbar nachfolgendem Arbeitsgang sämtliche Dichtelemente in einem Arbeitsgang, zum Beispiel durch das an sich bekannte Injektion-Molding-Verfahren, am Verschlußdeckel anzuspritzen.

Bevorzugt werden die Dichtelemente zumindest für den beziehungsweise die statischen Dichtbereiche in Nuten des Grundkörpers angeordnet, um ein relativ großvolumiges und an den Dichtspalt zwischen Deckel und Gehäuse anpassungsfähiges Gummiprofil für eine sichere Abdichtung des statischen Dichtbereiches zu ermöglichen, so daß auf besondere Versteifungsrippen des Deckels verzichtet werden kann.

Ein weiterer Vorteil der Erfindung ist darin zu sehen, daß durch die zusätzlichen Dichtgrenzen als Verbindungskörper der Dichtelemente untereinander abgegrenzte Dichtflächenfelder entstehen, die zu einer verminderten Leckage beitragen.

Der dynamische Dichtbereich entspricht bevorzugt dem Profil eines Radial-Wellendichtringes und ist an einen Radial-Ansatz des Deckel-Grundkörpers angespritzt und anvulkanisiert.

Da vielfach an den dynamischen Dichtbereich größere Anforderungen als an den statischen Dichtbereich gestellt werden, wird weiterhin vorgeschlagen, die beiden Dichtbereiche aus unterschiedlichen Elastomermaterialien, gegebenenfalls auch unterschiedlicher Härte, herzustellen. Für das Dichtelement des dynamischen Dichtbereiches könnte dazu ein hochwertiges Elastomermaterial Anwendung finden, wohingegen für das beziehungsweise die Dichtelemente des beziehungsweise der statischen Dichtbereiche ein preiswertes Elastomermaterial zur vollen Zufriedenheit hinsichtlich seiner Abdichtgüte eingesetzt werden könnte. Beide Materialien könnten in einem Arbeitsgang, zum Beispiel mit Hilfe von zwei Spritzköpfen, mit dem Grundkörper verbunden werden.

Bevorzugt ist der Boden der Nuten nur teilweise mit Elastomermaterial bedeckt und die Höhe der statisch wirkenden Gummiprofile ist so hoch ausgebildet, daß letztere in definiertem Maß über den Rand der Nut vorstehen. Durch diese Maßnahme ist sichergestellt, daß sich das Elastomermaterial beim Andrücken des Verschlußdeckels an das Gehäuse in den Restflächenbereich des Nutquerschnitts ausweichen kann, ohne daß es zu einem Abquetschen oder einer Beschädigung des Elastomermaterials kommt.

Eine bevorzugte Variante in der Ausbildung des Elastomermaterials im Verhältnis zur Nut beziehungsweise den Nuten ist darin zu sehen, daß das Volumen der Nut etwa 30 % größer ist als das Volumen des zur Abdichtung notwendigen Elastomermateriales.

Die Erfindung ist in der Zeichnung anhand eines ausgewählten Beispieles dargestellt und wird im folgenden näher beschrieben. Es zeigen:

Figuren 1 bis 3 unterschiedliche Ansichten eines erfindungsgemäßen Verschlußdeckels

Figur 4 das Querschnittsprofil einer Nut (vergrößert).

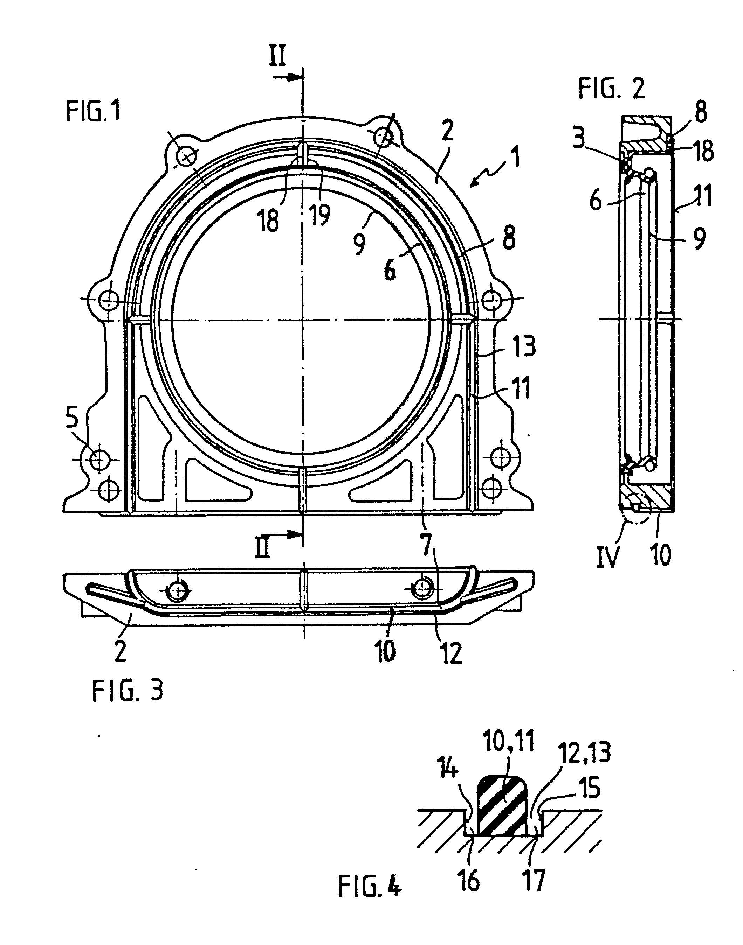

In den Figuren 1 bis 3 ist ein Verschlußdeckel 1 zur Abdichtung eines nicht weiter dargestellten Kurbelgehäuses einer Brennkraftmaschine abgebildet. Der Verschlußdeckel 1 besteht aus einem im Spritzgußverfahren hergestellten Leichtmetall-Grundkörper 2. Mittels in die Schraubendurchgangslöcher 5 einführbarer Schrauben kann der Verschlußdeckel 1 an das Gehäuse angeschraubt werden. Der Verschlußdeckel 1 weist einen für einen Wellendurchtritt dienenden dynamischen Dichtbereich 6 und zwei statische Dichtbereiche 7,8 auf. Alle drei in unterschiedlichen Ebenen liegenden Dichtbereiche 6 bis 8 weisen profilierte Gummi-Dichtelemente 9 bis 11 auf, wobei das Dichtelement 9 die Form eines mehrlippigen Radial-Wellendichtringes besitzt, der an einen Radial-Ansatz 3 des Deckel-Grundkörpers 2 anvulkanisiert ist, während die beiden anderen Dichtgrenzen 10,11 aus in Nuten einvulkanisierten Gummi-Rechteck-Profilen bestehen.

In Figur 4 ist das Querschnittsprofil der Nuten 12, 13 vergrößert dargestellt. Die Dichtelemente 10, 11 weisen zu den Seitenwänden 14, 15 der Nuten 12, 13 Fugen 16, 17 auf, in die das Elastomermaterial des Dichtelementes 10, 11 bei Druckbeaufschlagung ausweichen kann.

Gemäß dem Hauptgedanken der Erfindung sind sämtliche Dichtelemente 9 bis 11 durch weitere in Nuten 19 angeordnete Gummiprofile 18 miteinander verbunden. Die so gebildeten elastischen Dichtgrenzen sichern eine gute Abdichtung bei gleichzeitiger vereinfachter Herstellung. Der Grundkörper 2 wird in die entsprechende Form einer Injektion-Vulkanisations-Einrichtung eingelegt und in einem Arbeitsgang mit Elastomermaterial umspritzt, wobei dieses, ausgehend vom dynamischen Dichtbereich, über die unterschiedlichen radialen und axialen Nuten 19 in die statischen Dichtbereiche 7,8 fließen kann.

## Patentansprüche

1. Verschlußdecke 1(1), insbesondere zur Abdichtung der Öffnung eines mit einer Welle oder Stange bestückten Gehäuses, bestehend aus einem profilierten, gegebenenfalls mit Schraubendurchgangslöchern versehenen Grundkörper (2), der einen dynamischen, konzentrisch zur Welle oder Stange verlaufenden, sowie mindestens einen in Abhängigkeit von der Kontur des Gehäuses in einer anderen Ebene liegenden, im wesentlichen flächenförmig ausgebildeten Dichtbereich (7, 8, 9) aufweist, wobei beide Dichtbereiche (7, 8, 9) mit Dichtelementen versehen sind, dadurch gekennzeichnet, daß Dichtelemente (9, 10, 11) aus am Deckel-Grundkörper (2) anvulkanisierten Gummiprofilen bestehen, die über zusätzliche Dichtgrenzen (18) miteinander verbunden sind.

2. Verschlußdeckel nach Anspruch 1, dadurch gekennzeichnet, daß das Dichtelement (9) für den dynamischen Dichtbereich an einen Radial-Ansatz (3) des Grundkörpers (2) anvulkanisiert ist.

3. Verschlußdeckel nach Anspruch 1, dadurch gekennzeichnet, daß die Dichtelemente (10,11) des statischen Dichtbereiches (7, 8) in Nuten (12, 13) des Grundkörpers (2) angeordnet sind.

4. Verschlußdeckel nach den Ansprüchen 1 bis 3, dadurch gekennzeichnet, daß die Nuten (19), vom dynamischen Dichtbereich (6) ausgehend, sich in unterschiedlichen radialen und/oder axialen Richtungen auf den statischen Dichtbereich (7, 8) zu erstrecken.

5. Verschlußdeckel nach den Ansprüchen 1 bis 4, dadurch gekennzeichnet, daß die Dichtelemente (9) für den dynamischen Dichtbereich (6) und die Dichtelemente (10, 11) für den statischen Dichtbereich (7, 8) aus unterschiedlichen Elastomermaterialien bestehen.

6. Verschlußdeckel nach den Ansprüchen 1 bis 5, dadurch gekennzeichnet, daß die Nuten (12, 13, 19) ein etwa rechteckiges Querschnittsprofil aufweisen.

7. Verschlußdeckel nach den Ansprüchen 1 bis 6, dadurch gekennzeichnet, daß der Boden der Nuten (12, 13, 19) nur teilweise mit Elastomermaterial bedeckt ist.

8. Verschlußdeckel nach den Ansprüchen 1 bis 7, dadurch gekennzeichnet, daß das Elastomermaterial des statischen Dichtbereiches (7, 8) eine größere Höhe als die Tiefe der Nuten (12, 13) aufweist.

9. Verschlußdeckel nach den Ansprüchen 1 bis 8, dadurch gekennzeichnet, daß das Volumen der Nut (12, 13, 19) etwa 30 % größer ist als das Volumen des zur Abdichtung notwendigen Elastomermaterials.

## Claims

1. Sealing cover (1), especially for sealing the opening of a housing equipped with a shaft or rod, comprising a profiled body (2), if appropriate containing through bolt holes, with a dynamic sealing region running concentrically with the shaft or rod and at least one essentially planar sealing region (6, 7, 8) resting in another plane according to the contour of the housing, wherein both sealing regions (6, 7, 8) possess sealing elements, characterized by the fact that the sealing elements (9, 10, 11) consist of rubber profiles vulcanized to the cover body (2) and connected together by means of additional partition elements (18).

2. Sealing cover according to claim 1, characterized by the fact that the sealing element (9) for the dynamic sealing region is vulcanized onto a radial projection (3) on the body (2).

3. Sealing cover according to claim 1, characterized by the fact that the sealing elements (10, 11) of the static sealing region (7, 8) are disposed in grooves (12, 13) in the body (2).

4. Sealing cover according to claims 1 to 3, characterized by the fact that the grooves (19), proceeding from the dynamic sealing region (6), extend in different readial and/or axial directions towards the static sealing region (7, 8).

5. Sealing cover according to claims 1 to 4, characterized by the fact that the sealing elements (9) for the dynamic sealing region (6) and the sealing elements (10, 11) for the static sealing region (7, 8) are made of different elastomeric materials.

6. Sealing cover according to claims 1 to 5, characterized by the fact that the grooves (12, 13, 19) have a roughly rectangular cross-sectional profile.

7. Sealing cover according to claims 1 to 6, characterized by the fact that the base of the grooves (12, 13, 19) is only partially covered with elastomeric material.

8. Sealing cover according to claims 1 to 7, characterized by the fact the the elastomeric material of the static sealing region (7, 8) is greater in height than the depht of the grooves (12, 13).

9. Sealing cover according to claims 1 to 8, characterized by the fact that the volume of the groove (12, 13, 19) is roughly 30 % greater than the volume of the elastomeric material necessary for sealing.

**Revendications**

I. Couvercle de fermeture (1), en particulier pour l'étanchéification de l'orifice d'un carter coopérant avec un arbre ou une tige, comportant un corps de base (2) profilé, le cas échéant muni de trous pour le passage de vis, qui comprend une zone d'étanchéité dynamique (6) s'étendant concentriquement à l'arbre ou à la tige et au moins une zone d'étanchéité (7, 8) essentiellement superficielle reposant dans un autre plan et liée au contour du carter, les deux zones d'étanchéité étant munies d'éléments d'éatanchéité, caractérisé en ce que les éléments d'étanchéité (9, 10, 11) se composent de profilés de caoutchouc vulcanisés sur un ensemble couvercle-corps de base (2), lesquels profilés sont liés ensemble au-dessus de frontières d'étanchéité additionnelles (18).

2. Couvercle de fermeture selon la revéndication 1, caractérisé en ce que l'élément d'étanchéité (9) pour la zone d'étanchéité dynamique est vulcanisé sur un épaulement radial (3) du corps de base (2).

3. Couvercle de fermeture selon la revendication 1, caractérisé en ce que les éléments d'étanchéité (10, 11) de la zone d'étanchéité statique (7, 8) sont disposés dans les gorges (12, 13) du corps de base (2).

4. Couvercle de fermeture selon les revendications 1 à 3, caractérisé en ce que les gorges (19), qui sortent de la zone d'étanchéité dynamique (6), s'étendent dans des directions radiales et/ou axiales différentes sur la zone d'étanchéité statique (7, 8).

5. Couvercle de fermeture selon les revendications 1 à 4, caractérisé en ce que les éléments d'étanchéité (9) pour la zone d'étanchéité dynamique (6) et les éléments d'étanchéité (10, 11) pour le zone d'étanchéité statique (7, 8) se composent de matériaux élastomères différents.

6. Couvercle de fermeture selon les revendications 1 à 5, caractérisé en ce que les gorges (12, 13, 19) présentent une section sensiblement rectangulaire.

7. Couvercle de fermeture selon les revendications 1 à 6, caractérisé en ce que le fond des gorges (12, 13, 19) n'est couvert que partiellement de matériau élastomère.

8. Couvercle de fermeture selon les revendications 1 à 7, caractérisé en ce que le matériau élastomère de la zone d'étanchéité statique (7, 8) a une hauteur supérieure à la profondeur des gorges (12, 13).

9. Couvercle de fermeture selon les revendications 1 à 8, caractérisé en ce que le volume des gorges (12, 13, 19) est supérieur d'environ 30 % au volume du matériau élastomère nécessaire pour l'étanchéification.

FIG.1

FIG. 2

FIG. 3

10,11
14
12,13
15
16
17
FIG.4